# EUROPÄISCHE PATENTSCHRIFT

(11) **EP 2 494 873 B1**
(45) Veröffentlichungstag und Bekanntmachung des Hinweises auf die Patenterteilung: **15.08.2018**
(21) Anmeldenummer: 11156727.7
(22) Anmeldetag: 03.03.2011
(51) Int. Cl.: A23G 1/18, A23G 3/02, B08B 3/04, F28D 7/00, F28G 9/00

(54) **Reinigungsvorrichtung für eine Temperiermaschine**
Cleaning device for a tempering machine
Dispositif de nettoyage pour une machine de thermorégulation

(43) Veröffentlichungstag der Anmeldung: 05.09.2012
(60) Teilanmeldung: 17183774.3
(73) Patentinhaber: Sollich KG, 32105 Bad Salzuflen (DE)
(72) Erfinder: Bläsing, Rüdiger, 33613, Bielefeld (DE)
(74) Vertreter: Rehberg, Bernhard Frank

(56) Entgegenhaltungen:
- DE-A1- 19 709 700
- JP-A- 62 037 699
- US-B1- 6 978 793
- DATABASE WPI Week 200943 Thomson Scientific, London, GB; AN 2009-K54778 XP000002657049, -& CN 101 451 797 A (SHEN Z) 10. Juni 2009 (2009-06-10)
- DATABASE WPI Week 201123 Thomson Scientific, London, GB; AN 2011-B38110 XP002666454, -& CN 201 684 753 U (GUANGZHOU ZHUJIANG BREWERY CO LTD) 29. Dezember 2010 (2010-12-29)

## Beschreibung

### TECHNISCHES GEBIET DER ERFINDUNG

Die Erfindung betrifft einen Wärmetauscher zum temperaturmäßigen Behandeln einer fetthaltigen Süßwarenmasse mit einem Eingang, durch den die Süßwarenmasse in den Wärmetauscher einbringbar ist und einem Ausgang, durch den die temperaturmäßig behandelte Süßwarenmasse aus dem Wärmetauscher austreten kann. Weiterhin ist ein Behälter vorhanden, in den Reinigungsmasse einfüllbar und von dort durch den Wärmetauscher für dessen Reinigung förderbar ist.

Bei dem Wärmetauscher handelt es sich um eine Temperiermaschine und bei der fetthaltigen Süßwarenmasse kann es sich insbesondere um eine Schokolademasse handeln. Bei einem so genannten Massewechsel ist es wünschenswert bzw. erforderlich, eine Reinigung des Wärmetauschers durchzuführen, um eine Verunreinigung der neuen zu verarbeitenden Süßwarenmasse mit der zuvor verarbeiteten Süßwarenmasse zu verhindern.

### STAND DER TECHNIK

Im Stand der Technik ist es bekannt, vor einem Massewechsel in einem Wärmetauscher zum temperaturmäßigen Behandeln einer fetthaltigen Süßwarenmasse zunächst die Restmenge der bisher verarbeiteten fetthaltigen Süßwarenmasse aus dem Massetank abzulassen bzw. diese aus diesem herauszusaugen. Anschließend wird eine Reinigungsmasse in den Massetank eingefüllt und der Wärmetauscher so in Betrieb genommen, dass die Reinigungsmasse durch die den Massetank mit dem Eingang des Wärmetauschers verbindende Leitung in den Wärmetauscher eintritt, mittels der Massepumpe weiter durch diesen gefördert, am Ausgang des Wärmetauschers aus diesem austritt und in den Massebehälter zurückgeführt wird.

Anders gesagt wird die vorhandene Funktionalität des Wärmetauschers im Sinne des Massetanks, der Massepumpe und der Leitungen am Eingang und am Ausgang des Wärmetauschers ohne bauliche Änderungen für den Reinigungsvorgang genutzt.

Aus dem US-amerikanischen Patent US 6,978,793 B1 sind ein reinigbarer statischer Wärmetauscher und eine Reinigungsvorrichtung zur Reinigung eines derartigen statischen Wärmetauschers bekannt. Die Reinigungsmasse ist in einem Behälter enthalten und kann über Leitungen in zwei verschiedenen Förderrichtungen durch den statischen Wärmetauscher zur Reinigung gefördert werden.

Weitere Reinigungsvorrichtungen für statische Wärmetauscher sind aus DATABASE WPI Week 200943 Thomson Scientific, London, GB; AN 2009-K54778, XP000002657049, -& CN 101 451 797 A (SHEN Z) 10. Juni 2009, der deutschen Patentanmeldung DE 197 09 700 A1 und der japanischen Patentanmeldung JP 62 037699 A bekannt.

Weitere Vorrichtungen sind aus DATABASE WPI Week 201123 Thomson Scientific, London, GB; AN 2011-B38110, -& CN 201 684 753 U (GUANGZHOU ZHUJIANG BREWERY CO LTD) 29. Dezember 2010 bekannt.

### AUFGABE DER ERFINDUNG

Der Erfindung liegt die Aufgabe zugrunde, einen Wärmetauscher zum temperaturmäßigen Behandeln einer fetthaltigen Süßwarenmasse bereitzustellen, der innerhalb einer relativ kurzen Reinigungszeit einfach und gründlich gereinigt werden kann.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft einen Wärmetauscher zum temperaturmäßigen Behandeln einer fetthaltigen Süßwarenmasse gemäß Patentanspruch 1.

Die Erfindung betrifft auch ein Verfahren zum Reinigen eines Wärmetauschers zum temperaturmäßigen Behandeln einer fetthaltigen Süßwarenmasse gemäß Patentanspruch 5.

### Definitionen

Bei dem Wärmetauscher handelt es sich um eine Temperiermaschine, wobei diese insbesondere einen bekannten scheibenförmigen Aufbau ("Scheibentemper") oder einen schneckenförmigen Aufbau ("Schneckentemper") besitzen kann. Eine solche Temperiermaschine ist als dynamischer Wärmetauscher anzusehen. Weitere dynamische Wärmetauscher sind beispielsweise ein Dekristallisator und ein Vorkühler.

Die in dem Wärmetauscher temperaturmäßig zu behandelnde - d. h. zu kühlende, zu erwärmende oder temperaturmäßig konstant zu haltenden - fetthaltige Süßwarenmasse kann insbesondere Schokolade sein. Es kann sich jedoch ebenfalls um andere fetthaltige Süßwarenmassen, insbesondere Kakaobutter, kakaobutterhaltige Massen, Füllungsmassen oder Mischungen daraus handeln. Besonders kritisch ist ein Massewechsel von dunkler Schokolade zu weißer Schokolade oder von laurischen Fetten zu nicht-laurischen Fetten.

Bei der Reinigungsmasse kann es sich um eine beliebige Masse - z. B. eine pastöse Masse, eine Flüssigkeit oder eine Suspension - handeln, die für die Reinigung des Innenraums des Wärmetauschers und insbesondere der Teile des Innenraums des Wärmetauschers dient, die im normalen Temperierbetrieb mit der Süßwarenmasse in Kontakt kommen. Die Reinigungsmasse wird also entlang des Strömungspfads in dem Wärmetauscher geführt, gemäß welchem dieser im normalen Temperierbetrieb von Süßwarenmasse durchströmt wird. Bei der Reinigungsmasse kann es sich beispielsweise um Kakaobutter, Schokolade, eine andere Fettmasse, Öl, Wasser oder eine Mischung aus diesen Massen handeln.

### Hintergrund

Für die Herstellung von Schokoladeprodukten und anderen fettbasierten Nahrungsmittelprodukten werden Wärmetauscher zum temperaturmäßigen Behandeln fetthaltiger Süßwarenmassen eingesetzt. Für die Vielzahl der herzustellenden Produkte müssen entsprechend auch unterschiedliche Süßwarenmassen nacheinander in dem Wärmetauscher verarbeitet werden. Dafür wird zunächst die Produktion mit einer ersten Süßwarenmasse beendet, damit darauffolgend die Produktion mit der neuen Süßwarenmasse begonnen werden kann. Eine derartige Umstellung der Produktion wird auch als Massewechsel bezeichnet.

Vor dem Produktionsstart mit der neuen Masse (z. B. weiße Schokolade) ist daher eine Reinigung des Innenraums des Wärmetauschers von der bisherigen Masse (z. B. dunkle Schokolade oder Milchschokolade) wünschenswert bzw. erforderlich. Unter dem Innenraum ist dabei insbesondere der Bereich des Wärmetauschers zu verstehen, der im normalen Betrieb des Wärmetauschers mit der Süßwarenmasse in Kontakt kommt. Weiterhin kann es gewünscht bzw. erforderlich sein, den Wärmetauscher auch ohne Änderung der zu verarbeitenden Süßwarenmasse von Zeit zu Zeit zu reinigen, um die Ablagerung von Süßwarenmasse oder Ingredienzien im Innenraum des Wärmetauschers zu verringern und alte Süßwarenmasse zu entfernen.

Im Stand der Technik bestand bei einer derartigen Reinigung des Wärmetauschers bisher das Problem, dass diese nur unter Verwendung einer sehr großen Menge an Reinigungsmasse ohne Erreichung des gewünschten Reinigungsergebnisses möglich war und die Reinigung im Übrigen sehr lange dauerte.

### Wirkungsweise

Dieses Problem wird nun durch den neuen Wärmetauscher mit der erfindungsgemäßen speziellen Reinigungsfunktionalität gelöst, wie diese in den unabhängigen Patentansprüchen definiert ist.

Hiermit werden die erforderliche Menge an Reinigungs- oder Spülmasse und die benötigte Reinigungszeit reduziert sowie die Reinigungswirkung stark verbessert. Die Reinigungsmasse wird nicht mehr nur gemäß einer Förderrichtung durch den Wärmetauscher gefördert. Stattdessen wird sie abwechselnd gemäß zwei entgegen gesetzten Förderrichtungen durch den Wärmetauscher gefördert. Es versteht sich, dass dies in zwei zeitlich getrennten Reinigungsschritten und nicht gleichzeitig erfolgt. Dabei kann sowohl zunächst für eine gewisse Zeitspanne die Reinigungsmasse gemäß einer ersten Förderrichtung vom Eingang in Richtung des Ausgangs und anschließend gemäß der zweiten Förderrichtung vom Ausgang in Richtung des Eingangs gefördert werden. Die umgekehrte Reihenfolge ist ebenfalls möglich. Die Förderrichtung kann einmal oder mehrmals gewechselt werden. Durch die Umkehrung der Förderrichtung wird erreicht, dass die Reinigungsmasse nicht immer nur mit denselben Teilen im Innenraum des Wärmetauschers in Kontakt kommt. Anders gesagt wird vermieden, dass bestimmte Toträume, die nur in einer Förderrichtung bestehen, das Reinigungsergebnis verschlechtern. Diese Toträume werden also von der Reinigungsmasse erreicht, wenn diese gemäß der anderen Förderrichtung durch den Wärmetauscher gefördert wird.

Die Reinigungswirkung ist dadurch weiter verbessert, dass eine Pumpe zum Fördern der Reinigungsmasse durch den Wärmetauscher vorgesehen und die Pumpe so ausgebildet und angeordnet ist, dass die Reinigungsmasse mit mindestens dem doppelten, insbesondere mindestens dem dreifachen und bevorzugt mindestens dem fünffachen Volumenstrom im Vergleich zum Volumenstrom der Süßwarenmasse durch den Wärmetauscher förderbar ist. Der Volumenstrom kann auch etwa dem fünffachen bis zehnfachen, zehnfachen bis fünfzehnfachen oder mehr im Vergleich zum Volumenstrom der Süßwarenmasse durch den Wärmetauscher betragen. Dieser hohe Volumenstrom stellt sicher, dass eine sehr gute Reinigungsleistung in einer deutlich verkürzten Zeitspanne erreicht werden kann.

Um einen derart hohen Volumenstrom der Reinigungsmasse zu erzielen, kann die Pumpe insbesondere als Hochdruckkreiselpumpe, Zahnradpumpe oder Drehkolbenpumpe ausgebildet sein. Die Pumpe wird also nicht nur zur Realisierung des vergleichsweise geringen Volumenstroms der Süßwarenmasse, sondern des vergleichsweise großen Volumenstroms der Reinigungsmasse dimensioniert.

Der Wärmetauscher kann einen Massetank zum Aufnehmen der temperaturmäßig zu behandelnden Süßwarenmasse aufweisen und der Behälter kann als separater Reinigungsbehälter zusätzlich zum Massetank ausgebildet sein. Der Massetank ist dabei der Behälter, der in üblicher Weise während des Normalbetriebs des Wärmetauschers zum Bereitstellen der temperaturmäßig zu behandelnden Süßwarenmasse dient. Bei dem Reinigungsbehälter kann es sich also um einen zusätzlichen separaten Behälter handeln, der für den Reinigungsvorgang bestimmt ist. Hierdurch ergibt sich der Vorteil, dass der Reinigungsbehälter und ggf. weitere mit ihm in Verbindung stehende Komponenten speziell für das Reinigungsverfahren ausgelegt und dimensioniert werden können. Der Reinigungsbehälter kann beispielsweise ein deutlich geringeres Volumen als der Massetank aufweisen, da für die Reinigung ein geringeres Volumen an Reinigungsmasse im Vergleich zur Süßwarenmasse erforderlich ist und diese im Übrigen den Wärmetauscher mehrfach durchlaufen kann. Es ist jedoch ebenfalls möglich, dass es sich bei dem Behälter, in den die Reinigungsmasse eingefüllt wird, und den Massetank um ein und denselben Gegenstand handelt. In diesem Fall wird also der Massetank als Reinigungsbehälter eingesetzt und kein separater Reinigungsbehälter benötigt.

Der Wärmetauscher kann eine Massepumpe zum Fördern der Süßwarenmasse durch den Wärmetauscher aufweisen und die Pumpe kann als separate Reinigungspumpe zusätzlich zur Massepumpe ausgebildet sein. Hierdurch ergibt sich die Möglichkeit, die Reinigungspumpe speziell für den gewünschten Reinigungsvorgang zu dimensionieren, während die Massepumpe unverändert bleiben kann. Eine derartige Konstellation bietet sich insbesondere für die Nachrüstung eines bestehenden Wärmetauschers mit der erfindungsgemäßen Reinigungsvorrichtung an.

Es ist jedoch ebenfalls möglich, dass der Behälter als Massetank des Wärmetauschers zum Aufnehmen der temperaturmäßig zu behandelnden Süßwarenmasse und die Pumpe als Massepumpe zum Fördern der Süßwarenmasse durch den Wärmetauscher ausgebildet ist. Hierdurch ergibt sich die Möglichkeit, die gewünschte neue Reinigungswirkung ohne einen zusätzlichen Behälter und eine zusätzliche Pumpe zu realisieren. Der vorhandene Massetank und die vorhandene Massepumpe müssen dann allerdings die durch das neue Reinigungsverfahren gestellten Anforderungen erfüllen. Eine derartige Konstellation bietet sich insbesondere für die Neuherstellung erfindungsgemäßer reinigbarer Wärmetauscher an.

Der Wärmetauscher weist einen Antrieb, eine durch den Antrieb antreibbare Antriebswelle und mit der Antriebswelle verbundene Mischwerkzeuge zum Mischen der Süßwarenmasse während ihres Durchlaufs durch den Wärmetauscher auf. wobei der Antrieb bezüglich seiner Drehrichtung reversierbar ausgebildet ist. Die Mischwerkzeuge dienen im normalen Betrieb des Wärmetauschers zum gründlichen Durchmischen der Süßwarenmasse während des Temperiervorgangs, so dass eine gleichmäßige Temperierung und insbesondere Kristallbildung realisiert wird. Diese Mischwerkzeuge werden nun auch beim neuen Reinigungsverfahren genutzt, indem sie auch beim Durchlauf der Reinigungsmasse rotierend angetrieben werden. Dabei kann insbesondere die Drehzahl der Antriebswelle im Vergleich zum Normalbetrieb vergrößert werden, um die Reinigungswirkung weiter zu verbessern. Die Drehzahl kann dabei insbesondere mindestens etwa doppelt so groß und insbesondere mindestens etwa 2,5 Mal so groß und mehr im Vergleich zur normalen Drehzahl während des Temperierbetriebs sein. Wenn nun zusätzlich auch die Drehrichtung der Mischwerkzeuge innerhalb definierbarer Intervalle umgekehrt wird, wird die Reinigungszeit weiter verkürzt und die Reinigungswirkung weiter verbessert. Dabei kann die Umkehrung der Drehrichtung der Mischwerkzeuge auch in definierter Weise mit der Umkehrung der Förderrichtung der Reinigungsmasse durch den Wärmetauscher koordiniert werden.

Durch die vorgenannten Maßnahmen wird eine ausreichend turbulente Strömung auf der Oberfläche der Mischwerkzeuge (beispielsweise Rührscheiben) erreicht. Durch die Förderung der Reinigungsmasse gemäß der zweiten Förderrichtung - d. h. vom Ausgang in Richtung des Eingangs - durch den Wärmetauscher wird insbesondere eine gute Reinigung der Oberseiten der Mischwerkzeuge erzielt. Die Reinigungseffekte können durch Umschalten der Förderrichtung sowohl im Wechsel als auch länger andauernd weiter optimiert werden. Dabei kommt auch der Temperatur der Reinigungsmasse eine Bedeutung bei. Sowohl eine zu hohe als auch eine zu niedrige Temperatur verschlechtern das Reinigungsergebnis.

Der Reinigungsbetrieb kann auch stoßweise im Sinne eines Pulsbetriebs unterbrochen werden, um damit den Reinigungseffekt noch weiter zu erhöhen. Weiterhin ist es möglich, spezielle Düsen im Wärmetauscher anzuordnen, über die Druckluft in den Innenraum des Wärmetauschers und die dort aufgenommene Reinigungsmasse einbringen, so dass ein Whirlpool-Effekt erzielt wird, der insbesondere die Entfernung hartnäckiger Anhaftungen weiter verbessert.

Durch den effektiven Einsatz der Reinigungsmasse gemäß dem neuen Reinigungsverfahren kann das benötigte Reinigungsmassenvolumen auf etwa das zweifache bis dreifache des Inhalts des Wärmetauschers reduziert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Eingang die Rede ist, ist dies so zu verstehen, dass genau ein Eingang, zwei Eingänge oder mehr Eingänge vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Ansicht einer ersten beispielhaften Ausführungsform des neuen Wärmetauschers zum temperaturmäßigen Behandeln einer fetthaltigen Süßwarenmasse.
- **Fig. 2**: zeigt eine schematische Ansicht einer zweiten beispielhaften Ausführungsform des neuen Wärmetauschers.
- **Fig. 3**: zeigt eine schematische Ansicht einer dritten beispielhaften Ausführungsform des neuen Wärmetauschers.
- **Fig. 4**: zeigt eine schematische Ansicht einer vierten beispielhaften Ausführungsform des neuen Wärmetauschers.
- **Fig. 5**: zeigt eine schematische Ansicht einer fünften beispielhaften Ausführungsform des neuen Wärmetauschers.
- **Fig. 6**: zeigt eine schematische Ansicht einer sechsten beispielhaften Ausführungsform des neuen Wärmetauschers.

### FIGURENBESCHREIBUNG

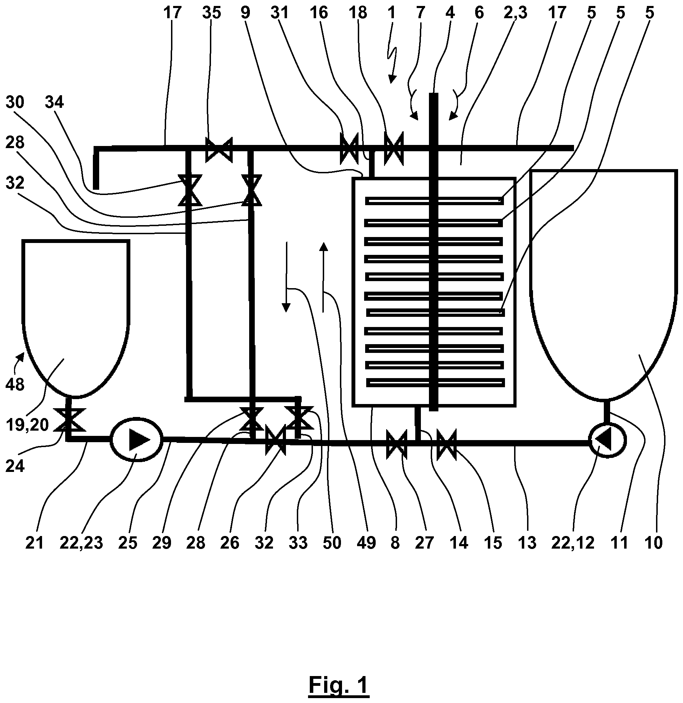

**Fig. 1** zeigt eine schematische Ansicht einer ersten beispielhaften Ausführungsform eines neuen Wärmetauschers 1 zum temperaturmäßigen Behandeln einer fetthaltigen Süßwarenmasse.

Der Wärmetauscher 1 ist hier als Temperiermaschine ausgebildet. Es könnte sich jedoch ebenfalls um einen beliebigen anderen Wärmetauscher zum temperaturmäßigen Behandeln einer fetthaltigen Süßwarenmasse handeln. Im vorliegenden Fall weist der Wärmetauscher 1 eine Temperiereinrichtung 2 auf, die als Scheibentemper 3 ausgebildet ist. Es könnte sich jedoch auch um eine andere Temperiereinrichtung 2, beispielsweise einen Schneckentemper, handeln.

Der Scheibentemper 3 selbst ist in an sich bekannter Weise aufgebaut, wie dies beispielsweise aus dem deutschen Patent DE 10 2004 033 712 B3 der Anmelderin bekannt ist. Für weitere Details des Aufbaus des Scheibentempers 3 wird somit auf dieses Dokuments des Stands der Technik und insbesondere auf die dortige Fig. 1 und den Absatz [0026] verwiesen. Die bereits bekannten Details werden nicht genauer beschrieben, sofern sie nicht für die Beschreibung der hier vorliegenden Erfindung benötigt werden.

Der Wärmetauscher 1 weist einen Antrieb (nicht dargestellt), eine durch den Antrieb antreibbare Antriebswelle 4 und mit der Antriebswelle 4 verbundene Mischwerkzeuge 5 auf, die zum Mischen der Süßwarenmasse während ihres Durchlaufs durch die Temperiereinrichtung 2 dienen. Die Süßwarenmasse strömt dabei durch Massekammern und wird über Temperierscheiben temperiert. Der Antrieb ist bezüglich seiner Drehrichtung reversierbar ausgebildet, so dass er die Antriebswelle 4 und somit die Mischwerkzeuge 5 gemäß Pfeil 6 oder Pfeil 7 antreiben kann.

Der Wärmetauscher 1 weist weiterhin einen Eingang 8 auf, durch den die Süßwarenmasse in den Wärmetauscher 1 einbringbar ist. Der Wärmetauscher 1 weist einen Ausgang 9 auf, durch den die temperaturmäßig behandelte Süßwarenmasse aus dem Wärmetauscher 1 austreten kann. Dazwischen liegt der Innenraum des Wärmetauscher 1.

Der Wärmetauscher 1 weist weiterhin einen Massetank 10 zum Aufnehmen der temperaturmäßig zu behandelnden Süßwarenmasse auf. Der Massetank 10 ist mittels einer Leitung 11 mit einer Massepumpe 12 verbunden, die über Leitungen 13, 14 mit dem Eingang 8 des Wärmetauschers 1 verbunden ist. In der Leitung 13 befindet sich ein Ventil 15, welches insbesondere als elektrisch schaltbares Absperrventil ausgebildet ist. Der Ausgang 9 des Wärmetauschers 1 ist dann über Leitungen 16, 17 mit einem hier nicht dargestellten Verbraucher verbunden. Die Leitung 17 ist also verkürzt dargestellt und führt tatsächlich zu einem Verbraucher, durch den die temperierte Süßwarenmasse weiterverarbeitet wird. In der Leitung 17 ist ein weiteres Ventil 18 angeordnet.

Der Wärmetauscher 1 weist einen Behälter 19 auf, in den Reinigungsmasse einfüllbar ist. Im vorliegenden Beispiel handelt es sich um einen separaten Reinigungsbehälter 20, der zusätzlich zum Massetank 10 vorgesehen ist. Wie anhand der später folgenden Ausführungsbeispiele beschrieben wird, können diese Funktionalitäten jedoch auch zusammengelegt sein. Am Ausgang des Reinigungsbehälters 20 ist eine Leitung 21 mit einer Pumpe 22 angeordnet. Die Pumpe 22 ist hier als separate Reinigungspumpe 23 zusätzlich zu der Massepumpe 12 ausgebildet. Wie anhand der später folgenden weiteren Ausführungsbeispiele beschrieben wird, könnten diese Funktionalitäten jedoch ebenfalls zusammengelegt sein. In dieser Weise wird eine Reinigungsvorrichtung 48 gebildet.

In der Leitung 21 ist ein Ventil 24 angeordnet, über welches der Ausgang des Reinigungsbehälters 20 abgesperrt werden kann. Über eine Leitung 25 ist dann die Reinigungspumpe 23 und somit der Behälter 19 mit dem Eingang 8 des Wärmetauschers 1 verbunden. In der Leitung 25 sind noch zwei Ventile 26, 27 angeordnet. Von der Leitung 25 zweigt eine Leitung 28 mit Ventilen 29, 30 ab. Die Leitung 28 mündet dann in die Leitung 17, wobei dort ein weiteres Ventil 31 angeordnet ist. Eine weitere Leitung 32 zweigt nach dem Ventil 26 von der Leitung 25 ab. In der Leitung 32 sind Ventile 33, 34 vorgesehen. Im Bereich zwischen den Leitungen 28, 32 ist in der Leitung 17 ein weiteres Ventil 35 angeordnet.

Anstelle der gezeigten 2/2-Wegeventile können auch ganz oder teilweise 3/2-Wegeventile verwendet und dadurch die Gesamtzahl der Ventile gesenkt werden. So können z. B. die Ventile 26, 29 und/oder 33 durch ein 3/2-Wegeventil und/oder die Ventile 30, 34 und/oder 35 durch ein anderes 3/2-Wegeventil ersetzt werden.

Bei den Leitungen kann es sich insbesondere um Rohrleitungen handeln. Es können jedoch auch andere Leitungsformen gewählt werden, die für den Transport der Süßwarenmasse geeignet sind. Bei den Ventilen handelt es sich insbesondere um elektrisch schaltbare Absperrventile. Es können jedoch auch andere geeignete Ventilbauarten gewählt werden. Die elektrisch schaltbaren Ventile werden mittels einer elektrischen bzw. elektronischen Regeleinrichtung geschaltet, die aus Gründen der Übersichtlichkeit nicht weiter dargestellt ist. Das Schalten kann entweder unmittelbar elektrisch oder mittelbar elektrisch realisiert sein, indem z. B. ein fluidischer Schaltdruck elektrisch freigegeben wird. Auch die elektrischen Leitungen der Ventile sind aus Gründen der Übersichtlichkeit nicht dargestellt.

Der Betrieb des Wärmetauschers 1 gemäß Fig. 1 kann wie folgt beschrieben werden:

### Betriebszustand 1: Temperieren

In diesem Betriebszustand findet die normale Temperierung der Süßwarenmasse in dem Wärmetauscher 1 statt.

Die zu temperierende Süßwarenmasse befindet sich in dem Massetank 10 und wird aus diesem mittels der Massepumpe 12 durch die Leitung 13, das geöffnete Ventil 15 und die Leitung 14 in den Eingang 8 des Wärmetauschers 1 gepumpt. Das Ventil 27 ist geschlossen, so dass die Süßwarenmasse nicht durch die Leitung 25 strömt.

Die Süßwarenmasse wird nun in der Temperiereinrichtung in der bekannten Weise temperiert, d. h. während ihres Durchlaufs temperaturmäßig behandelt und dabei mittels der Mischwerkzeuge 5 durchmischt. Hierfür wird die Antriebswelle 4 gemäß Pfeil 6 rotierend angetrieben. Die temperierte Süßwarenmasse verlässt dann die Temperiereinrichtung 2 durch den Ausgang 9 und fließt durch die Leitung 17 und das geöffnete Ventil 18 in Richtung eines nicht dargestellten Verbrauchers. Das Ventil 31 ist geschlossen, so dass die Süßwarenmasse nicht in die entgegengesetzte Richtung strömt.

Es versteht sich, dass die weiteren Ventile ebenfalls geschlossen sein können, dies jedoch nicht notwendigerweise der Fall ist.

### Betriebszustand 2: Temperieren beenden

In diesem Betriebszustand wird der normale Temperierbetrieb des Wärmetauschers 1 beendet, um beispielsweise einen Massewechsel durchzuführen oder aus anderen Gründen eine Reinigung des Wärmetauschers 1 vorzunehmen.

In den Massetank 10 wird keine zusätzliche Süßwarenmasse mehr zugeführt und die vorhandene Süßwarenmasse wird in der gewünschten Weise aufgebraucht.

Für die Vorbereitung des Wärmetauschers 1 für die Reinigung wird dann zunächst möglichst viel Restmenge an Süßwarenmasse aus dem Wärmetauscher 1 entfernt. Dies wird durch Rückpumpen der Süßwarenmasse mittels der Massepumpe 12 bei gleichzeitiger Drehrichtungsumkehr - d. h. Drehung der Antriebswelle 4 gemäß Pfeil 7 - und eine gegenüber dem Temperierbetrieb erhöhte Drehzahl der Antriebswelle 4 erreicht. Die Drehzahl der Antriebswelle 4 kann insbesondere mindestens auf den doppelten, dreifachen oder noch größeren Wert im Vergleich zum Temperierbetrieb erhöht werden. Durch diese Maßnahmen wird erreicht, dass sich noch in der Temperiereinrichtung 2 befindende Süßwarenmasse von den Mischwerkzeugen 5 weiter ablöst und die Restmenge an Süßwarenmasse in dem Wärmetauscher 1 bereits erheblich reduziert wird.

### Betriebszustand 3a: Reinigen (Reinigungsrichtung 1)

In diesem Betriebszustand wird der Innenraum des Wärmetauschers 1 gereinigt.

Reinigungsmasse, insbesondere Kakaobutter, Schokolade, Öl, Fettmasse, Wasser oder eine Mischung daraus, wird in den Reinigungsbehälter 20 eingefüllt.

Die Ventile 24, 26, 27, 31 und 35 werden geöffnet, während insbesondere die Ventile 15, 18, 30, 34 geschlossen werden bzw. sind. Auch die Ventile 29 und 33 werden vorzugsweise geschlossen. Die Pumpe 22 fördert die Reinigungsmasse somit durch das Ventil 24, die Leitung 21, die Leitung 25, das Ventil 26, das Ventil 27 und die Leitung 14 in den Eingang 8 des Wärmetauschers 1. Die Masse strömt dann durch die Massekammern des Wärmetauschers 1 und löst dabei die dort noch enthaltene Süßwarenmasse von den Wandungen und den Mischwerkzeugen 5 ab und fördert diese in Richtung des Ausgangs 9 weiter. Die Reinigungsmasse wird in dieser Weise gemäß einer ersten Förderrichtung 49 durch den Wärmetauscher 1 gefördert.

Dabei wird die Antriebswelle 4 in Richtung des Pfeils 7 in im Vergleich zum Temperierbetrieb umgekehrter Drehrichtung betrieben, so dass auch die Oberseiten der Mischwerkzeuge 5 sorgfältig gereinigt werden. Es ist jedoch ebenfalls möglich, die Antriebswelle 4 in Richtung des Pfeils 6 oder auch alternierend in der Richtung der Pfeile 6, 7 zu betreiben. Die Reinigungsmasse tritt dann durch den Ausgang 9 in die Leitung 16 und strömt durch das geöffnete Ventil 31, die Leitung 17 und das Ventil 35 schließlich zurück in den Reinigungsbehälter 20.

Dieser Durchlauf der Reinigungsmasse durch den Wärmetauscher 1 und dessen Komponenten kann beliebig oft wiederholt werden, wobei es sich herausgestellt hat, dass eine Anzahl von Durchläufen von mindestens etwa 10 und insbesondere mindestens etwa 15 vorteilhaft ist.

Es ist weiterhin möglich, die Ventile 15 und 18 zeitweise zu öffnen, so dass Reinigungsmasse auch in Leitungen einströmen kann, die nicht zum normalen Reinigungskreislauf gehören. Die Massepumpe 12 kann dann kurzzeitig betrieben werden, um die Reinigungsmasse in den Reinigungskreislauf zurückzuführen.

### Betriebszustand 3b: Reinigen (Reinigungsrichtung 2)

In diesem Betriebszustand durchläuft die Reinigungsmasse den Wärmetauscher 1 nun in umgekehrter Richtung.

Hierfür werden die Ventile 26, 35 geschlossen und die Ventile 29, 30, 33, 34 geöffnet. Die Reinigungsmasse wird dann mittels der Pumpe 22 durch die Leitung 25, die Leitung 28, das Ventil 29, weiter in der Leitung 28, durch das Ventil 30, die Leitung 17, das Ventil 31 und die Leitung 18 in den Ausgang 9 der Temperiereinrichtung 2 gefördert.

Die Reinigungsmasse durchläuft dann die Temperiereinrichtung 2 entgegen der ansonsten üblichen Strömungsrichtung - d. h. entgegengesetzt zu der Richtung, in der Süßwarenmasse die Temperiereinrichtung 2 durchströmt - in einer zweiten Förderrichtung 50. Hierdurch wird bereits besonders vorteilhaft auch Süßwarenmasse von solchen Teilen im Inneren der Temperiereinrichtung 2 entfernt, die ansonsten nicht oder nur schwierig erreicht werden. Vorzugsweise wird nun die Antriebswelle 4 gemäß Pfeil 6 in der bei der Temperierung üblichen Richtung angetrieben, so dass sich auch hier die gewünschte turbulente Strömung in den Massekammern der Temperiereinrichtung 2 ergibt.

Die Reinigungsmasse strömt dann weiter durch den Eingang 8 des Wärmetauschers 1 in die Leitung 15 und durch das Ventil 27, die Leitung 25, die Leitung 32, das Ventil 33, weiter durch die Leitung 32, durch das Ventil 34 und schließlich durch die Leitung 17 zurück in den Reinigungsbehälter 20.

Auch dieser Kreislauf der Reinigungsmasse kann beliebig häufig wiederholt werden, wobei es wiederum bevorzugt ist, diesen mindestens etwa 10 Mal und bevorzugt mindestens etwa 15 Mal zu wiederholen.

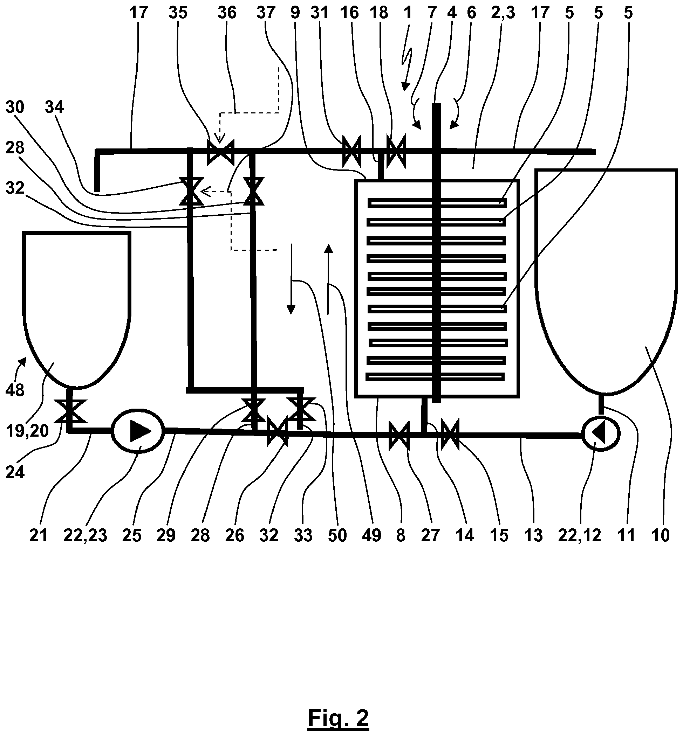

**Fig. 2** zeigt eine zweite beispielhafte Ausführungsform des Wärmetauschers 1. Diese Ausführungsform weist viele mit der Ausführungsform gemäß Fig. 1 übereinstimmende Merkmale auf, so dass bezüglich der übereinstimmenden Merkmale auf die vorangehende Beschreibung Bezug genommen wird.

Im Unterschied dazu ist hier durch die Pfeile 36, 37 symbolisiert, dass ein Pulsbetrieb realisiert werden kann. Bei diesem Pulsbetrieb wird der Reinigungsmassenfluss durch Öffnen und Schließen der Ventile 34, 35 stoßweise unterbrochen, um damit den Reinigungseffekt noch weiter zu erhöhen.

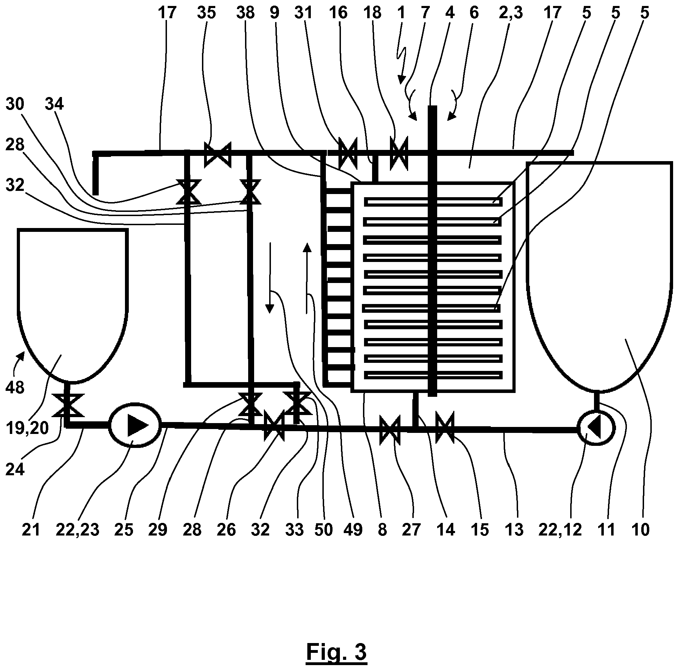

**Fig. 3** zeigt eine dritte beispielhafte Ausführungsform des Wärmetauschers 1. Diese Ausführungsform weist viele mit der Ausführungsform gemäß Fig. 1 übereinstimmende Merkmale auf, so dass bezüglich der übereinstimmenden Merkmale auf die vorangehende Beschreibung Bezug genommen wird.

Im Unterschied dazu weist der Wärmetauscher 1 eine weitere Leitung 38 auf, die sich über die Höhe der Temperiereinrichtung 2 erstreckt und von der Abzweigleitungen 39 mit den Massekammern des Scheibentempers 3 verbunden sind. Durch diese Abzweigleitungen 39, die endseitig als Düsen ausgebildet sind, wird Reinigungsmasse und/oder Druckluft in die Temperiereinrichtung 2 - und genauer gesagt die Massekammern des Scheibentempers 3 - eingebracht. Wenn Druckluft in dieser Weise eingebracht wird, wird ein Whirlpool-Effekt erzielt, der einen positiven Einfluss auf die Entfernung hartnäckiger Anhaftungen von Süßwarenmasse im Inneren der Temperiereinrichtung 2 besitzt. Die Düsen sind dabei auf der Masseseite selbstschließend ausgebildet, so dass sie den ansonsten vorhandenen Fluss der Reinigungsmasse nicht behindern.

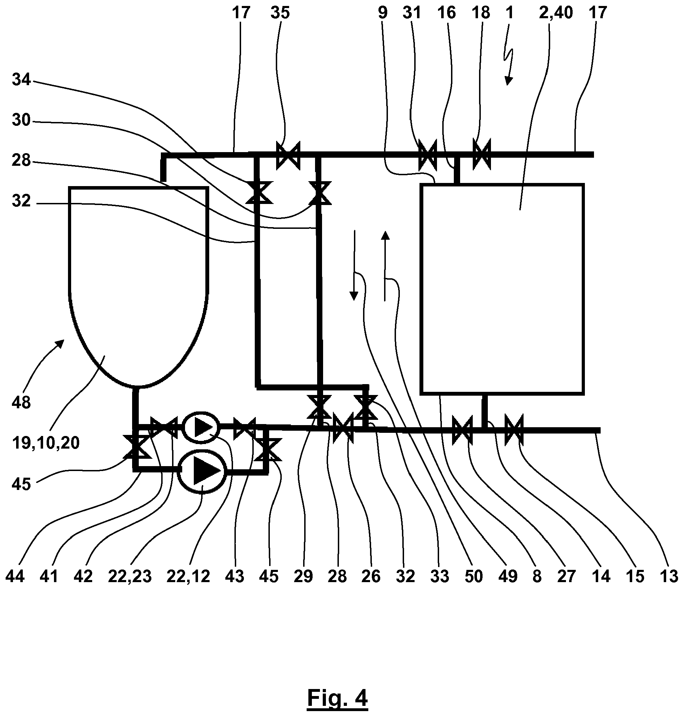

**Fig. 4** zeigt eine vierte beispielhafte Ausführungsform des Wärmetauschers 1. Diese Ausführungsform weist viele mit der Ausführungsform gemäß Fig. 1 übereinstimmende Merkmale auf, so dass bezüglich der übereinstimmenden Merkmale auf die vorangehende Beschreibung Bezug genommen wird.

Im Gegensatz dazu ist der Wärmetauscher 1 hier nicht als Scheibentemper 3, sondern als Schneckentemper 40 ausgebildet.

Weiterhin ist der Behälter 19 hier gleichzeitig als Massetank 10 und als Reinigungsbehälter 20 ausgebildet. Dementsprechend existieren zwei parallele Leitungsstränge für den Temperiervorgang und den Reinigungsvorgang. Der Leitungsstrang für den Temperiervorgang weist die Leitung 41, das Ventil 42, die Massepumpe 12 und das Ventil 43 auf. Der Leitungsstrang für die Reinigung weist die Leitung 44, das Ventil 45, die Reinigungspumpe 23 und das Ventil 45 auf.

Durch entsprechendes Öffnen bzw. Schließen der Ventile 42, 43, 45, 46 wird somit der entsprechende Leitungsstrang aktiviert bzw. deaktiviert.

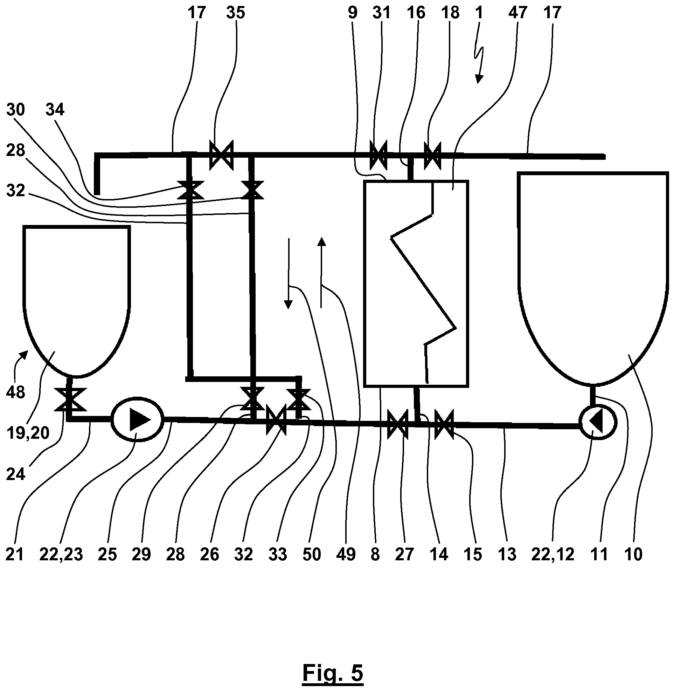

**Fig. 5** zeigt eine fünfte beispielhafte Ausführungsform des Wärmetauschers 1, die nicht unter den Wortlaut der geltenden Patentansprüche fällt. Diese Ausführungsform weist viele mit der Ausführungsform gemäß Fig. 1 übereinstimmende Merkmale auf, so dass bezüglich der übereinstimmenden Merkmale auf die vorangehende Beschreibung Bezug genommen wird.

Im Gegensatz dazu ist der Wärmetauscher 1 nicht als Temperiereinrichtung 2, sondern als ein sonstiger Wärmetauscher 47 ausgebildet.

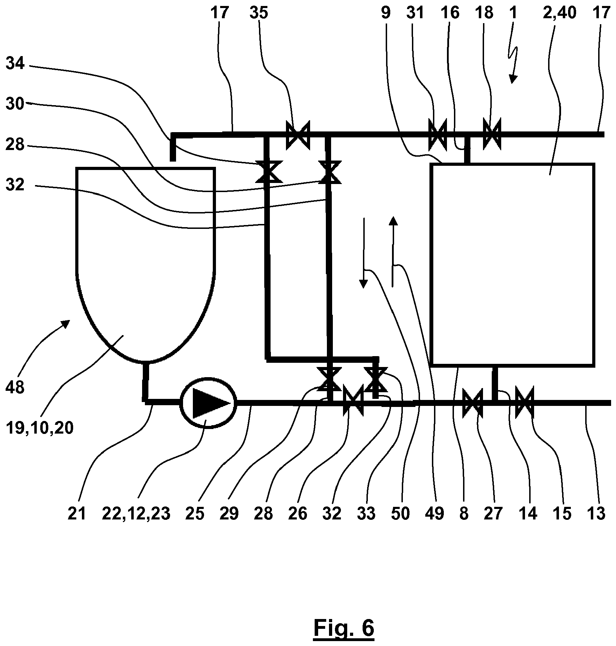

**Fig. 6** zeigt eine sechste beispielhafte Ausführungsform des Wärmetauschers 1. Diese Ausführungsform weist viele mit der Ausführungsform gemäß Fig. 1 übereinstimmende Merkmale auf, so dass bezüglich der übereinstimmenden Merkmale auf die vorangehende Beschreibung Bezug genommen wird.

Im Gegensatz dazu ist der Behälter 19 wiederum gleichzeitig als Massetank 10 und als Reinigungsbehälter 20 ausgebildet. Die Pumpe 22 ist gleichzeitig als Massepumpe 12 und als Reinigungspumpe 23 ausgebildet. Die Pumpe 22 ist daher so dimensioniert, dass sie auch den erhöhten Volumenstrom im Reinigungsbetrieb erzeugen kann.

### BEZUGSZEICHENLISTE

- 1: Wärmetauscher
- 2: Temperiereinrichtung
- 3: Scheibentemper
- 4: Antriebswelle
- 5: Mischwerkzeug
- 6: Pfeil
- 7: Pfeil
- 8: Eingang
- 9: Ausgang
- 10: Massetank
- 11: Leitung
- 12: Massepumpe
- 13: Leitung
- 14: Leitung
- 15: Ventil
- 16: Leitung
- 17: Leitung
- 18: Ventil
- 19: Behälter
- 20: Reinigungsbehälter
- 21: Leitung
- 22: Pumpe
- 23: Reinigungspumpe
- 24: Ventil
- 25: Leitung
- 26: Ventil
- 27: Ventil
- 28: Leitung
- 29: Ventil
- 30: Ventil
- 31: Ventil
- 32: Leitung
- 33: Ventil
- 34: Ventil
- 35: Ventil
- 36: Pfeil
- 37: Pfeil
- 38: Leitung
- 39: Abzweigleitung
- 40: Schneckentemper
- 41: Leitung
- 42: Ventil
- 43: Ventil
- 44: Leitung
- 45: Ventil
- 46: Ventil
- 47: sonstiger Wärmetauscher
- 48: Reinigungsvorrichtung
- 49: erste Förderrichtung
- 50: zweite Förderrichtung

## Patentansprüche

1. Wärmetauscher (1) zum temperaturmäßigen Behandeln einer fetthaltigen Süßwarenmasse, wobei der Wärmetauscher (1) als Temperiermaschine ausgebildet ist, mit:
einem Antrieb, einer durch den Antrieb antreibbaren Antriebswelle (4) und mit der Antriebswelle (4) verbundenen Mischwerkzeugen (5) zum Mischen der Süßwarenmasse während ihres Durchlaufs durch den Wärmetauscher (1), wobei der Antrieb bezüglich seiner Drehrichtung reversierbar ausgebildet ist,
einem Eingang (8), durch den die Süßwarenmasse in den Wärmetauscher (1) einbringbar ist,
einem Ausgang (9), durch den die temperaturmäßig behandelte Süßwarenmasse aus dem Wärmetauscher (1) austreten kann,
einem Behälter (19), in den Reinigungsmasse einfüllbar ist,
einer ersten Leitung (14), die den Behälter so mit dem Eingang (8) verbindet, dass die Reinigungsmasse gemäß einer ersten Förderrichtung (49) vom Eingang (8) in Richtung des Ausgangs (9) durch den Wärmetauscher (1) förderbar ist,
einer zweiten Leitung (16), die den Behälter (19) so mit dem Ausgang (9) verbindet, dass die Reinigungsmasse gemäß einer zweiten Förderrichtung (50) vom Ausgang (9) in Richtung des Eingangs (8) durch den Wärmetauscher (1) förderbar ist, und
einer Pumpe (22) zum Fördern der Reinigungsmasse durch den Wärmetauscher (1).

2. Wärmetauscher (1) nach Anspruch 1 **dadurch gekennzeichnet, dass** der Wärmetauscher (1) einen Massetank (10) zum Aufnehmen der temperaturmäßig zu behandelnden Süßwarenmasse aufweist und der Behälter (19) als separater Reinigungsbehälter (20) zusätzlich zum Massetank (10) ausgebildet ist.

3. Wärmetauscher (1) nach Anspruch 2, **dadurch gekennzeichnet, dass** der Wärmetauscher (1) eine Massepumpe (12) zum Fördern der Süßwarenmasse durch den Wärmetauscher (1) aufweist und die Pumpe (22) als separate Reinigungspumpe (23) zusätzlich zu der Massepumpe (12) ausgebildet ist.

4. Wärmetauscher (1) nach mindestens einem der Ansprüche 1 bis 2, **dadurch gekennzeichnet, dass**
der Behälter (19) als Massetank (10) des Wärmetauschers (1) zum Aufnehmen der temperaturmäßig zu behandelnden Süßwarenmasse ausgebildet ist, und
die Pumpe (22) als Massepumpe (12) zum Fördern der Süßwarenmasse durch den Wärmetauscher (1) ausgebildet ist.

5. Verfahren zum Reinigen eines Wärmetauschers (1) zum temperaturmäßigen Behandeln einer fetthaltigen Süßwarenmasse, insbesondere eines Wärmetauschers (1) nach mindestens einem der Ansprüche 1 bis 4, wobei der Wärmetauscher (1) als Temperiermaschine ausgebildet ist und einen Antrieb, eine durch den Antrieb antreibbare Antriebswelle (4) und mit der Antriebswelle (4) verbundene Mischwerkzeuge (5) zum Mischen der Süßwarenmasse während ihres Durchlaufs durch den Wärmetauscher (1) aufweist, wobei der Antrieb bezüglich seiner Drehrichtung reversierbar ausgebildet ist, mit den Schritten:
Einfüllen einer Reinigungsmasse in einen Behälter (19),
Fördern der Reinigungsmasse durch eine mit dem Behälter (19) und einem Eingang (8) des Wärmetauschers (1) verbundene erste Leitung (14) gemäß einer ersten Förderrichtung (49) in den Eingang (8) des Wärmetauschers (1), in Richtung eines Ausgangs (9) des Wärmetauschers (1) und aus diesem heraus, und
Fördern der Reinigungsmasse durch eine mit dem Behälter (19) und dem Ausgang (9) des Wärmetauschers (1) verbundene zweite Leitung (16) gemäß einer zweiten Förderrichtung (50) in den Ausgang (9) des Wärmetauschers (1), in Richtung des Eingangs (8) des Wärmetauschers (1) und aus diesem heraus.

6. Verfahren nach Anspruch 5, **dadurch gekennzeichnet, dass** die Reinigungsmasse abwechselnd gemäß der ersten Förderrichtung (49) und der zweiten Förderrichtung (50) durch den Wärmetauscher (1) gefördert wird.

7. Verfahren nach Anspruch 5 oder 6, **dadurch gekennzeichnet, dass** der Wärmetauscher (1) einen Massetank (10) zum Aufnehmen der temperaturmäßig zu behandelnden Süßwarenmasse aufweist und der Behälter (19) als separater Reinigungsbehälter (23) zusätzlich zum Massetank (10) ausgebildet ist.

8. Verfahren nach Anspruch 7, **dadurch gekennzeichnet, dass** der Wärmetauscher (1) eine Massepumpe (12) zum Fördern der Süßwarenmasse durch den Wärmetauscher (1) aufweist und die Pumpe (22) als separate Reinigungspumpe (23) zusätzlich zu der Massepumpe (12) ausgebildet ist.

9. Wärmetauscher (1) nach mindestens einem der Ansprüche 1 bis 4, **dadurch gekennzeichnet, dass** die Reinigungsmasse Kakaobutter, Schokolade, Fettmasse, Öl oder Wasser aufweist.

10. Verfahren nach mindestens einem der Ansprüche 5 bis 8, **dadurch gekennzeichnet, dass** die Reinigungsmasse Kakaobutter, Schokolade, Fettmasse, Öl oder Wasser aufweist.

## Claims

1. A heat exchanger (1) for treating a fat-containing confectionary mass with respect to temperature, the heat exchanger (1) being designed as a tempering machine, comprising:
a drive, a drive shaft (4) being drivable by the drive and mixing tools (5) being connected to the drive shaft (4) for mixing the confectionary mass during its passage through the heat exchanger (1), the drive being designed such that its sense of rotation is reversible,
an Inlet (8) through which the confectionary mass is introducible into the heat exchanger (1),
an outlet (9) through which the confectionary mass which has been treated with respect to temperature can exit the heat exchanger (1),
a container (19) into which cleaning mass can be filled,
a first conduit (14) connecting the container to the inlet (8) such that the cleaning mass is conveyable through the heat exchanger (1) according to a first conveying direction (49) from the Inlet (8) towards the outlet (9),
a second conduit (16) connecting the container (19) to the outlet (9) such that the cleaning mass is conveyable through the heat exchanger (1) according to a second conveying direction (50) from the outlet (9) towards the Inlet (8), and
a pump (22) for conveying the cleaning mass through the heat exchanger (1).

2. The heat exchanger (1) of claim 1, **characterised in that** the heat exchanger (1) includes a mass tank (10) for receiving the confectionary mass which has been treated with respect to temperature and that the container (19) is designed as a separate cleaning container (20) in addition to the mass tank (10).

3. The heat exchanger (1) of claim 2, **characterised in that** the heat exchanger (1) includes a mass pump (12) for conveying the confectionary mass through the heat exchanger (1) and that the pump (22) is designed as a separate cleaning pump (23) in addition to the mass pump (12).

4. The heat exchanger (1) of at least one of claims 1 to 2, **characterised in that**
the container (19) is designed as a mass tank (10) of the heat exchanger (1) for receiving the confectionary mass that has been treated with respect to temperature, and
the pump (22) is designed as a mass pump (12) for conveying the confectionary mass through the heat exchanger (1).

5. A method of cleaning a heat exchanger (1) for treating a fat-containing confectionary mass with respect to temperature, especially a heat exchanger (1) of at least one of claims 1 to 4, the exchanger (1) being designed as a tempering machine and including a drive, a drive shaft (4) being drivable by the drive and mixing tools (5) being connected to the drive shaft (4) for mixing the confectionary mass during its passage through the heat exchanger (1), the drive being designed such that its sense of rotation is reversible, comprising the steps of:
filling a cleaning mass into a container (19),
conveying the cleaning mass through a first conduit (14) being connected to the container (19) and an inlet (8) of the heat exchanger (1) according to a first conveying direction (49) into the inlet (8) of the heat exchanger (1), towards an outlet (9) of the heat exchanger (1) and out of it, and
conveying the cleaning mass through a second conduit (16) being connected to the container (19) and the outlet (9) of the heat exchanger (1) according to a second conveying direction (50) into the outlet (9) of the heat exchanger (1), towards the Inlet (8) of the heat exchanger (1) and out of it.

6. The method of claim 5, **characterised in that** the cleaning mass is conveyed through the heat exchanger (1) alternatingly according to the first conveying direction (49) and the second conveying direction (50).

7. The method of claim 5 or 6, **characterised in that** the heat exchanger (1) includes a mass tank (10) for receiving the confectionary mass which has been treated with respect to temperature and that the container (19) is designed as a separate cleaning container (23) in addition to the mass tank (10).

8. The method of claim 7, **characterised in that** the heat exchanger (1) includes a mass pump (12) for conveying the confectionary mass through the heat exchanger (1) and that the pump (22) is designed as a separate cleaning pump (23) in addition to the mass pump (12).

9. The exchanger (1) of at least one of claims 1 to 4, **characterised in that** the cleaning mass includes cocoa butter, chocolate, fat mass, oil or water.

10. The method of at least one of claims 5 to 8 **characterised in that** the cleaning mass includes cocoa butter, chocolate, fat mass, oil or water.

## Revendications

1. Échangeur thermique (1) pour le traitement thermique d'une masse de confiserie contenant des graisses, l'échangeur thermique (1) étant conçu comme un thermorégulateur, avec:
un dispositif d'entraînement, un arbre d'entraînement (4) pouvant être entraîné par le dispositif d'entraînement et des outils de mélange (5), reliés à l'arbre d'entraînement (4), pour le mélange de la masse de confiserie pendant son passage à travers l'échangeur thermique (1), le dispositif d'entraînement étant conçu de manière réversible en ce qui concerne son sens de rotation,
une entrée (8) par laquelle la masse de confiserie peut être introduite dans l'échangeur thermique (1),
une sortie (9) par laquelle la masse de confiserie traitée thermiquement peut sortir de l'échangeur thermique (1),
un récipient (19) dans lequel une masse de nettoyage peut être introduite,
une première conduite (14), qui relie le récipient avec l'entrée (8) de façon à ce que la masse de nettoyage puisse être convoyée dans une première direction de convoyage (49) de l'entrée (8) vers la sortie (9) à travers l'échangeur thermique (1),
une deuxième conduite (16), qui relie le récipient (19) avec la sortie (9), de façon à ce que la masse de nettoyage puisse être convoyée dans une deuxième direction de convoyage (50) de la sortie (9) vers l'entrée (8) à travers l'échangeur thermique (1) et
une pompe (22) pour le convoyage de la masse de nettoyage à travers l'échangeur thermique (1).

2. Échangeur thermique (1) selon la revendication 1, **caractérisé en ce que** l'échangeur thermique (1) comprend un réservoir de masse (10) pour le logement de la masse de confiserie à traiter thermiquement et le récipient est conçu comme un récipient de nettoyage séparé (20) en plus du réservoir de masse (10).

3. Échangeur thermique (1) selon la revendication 2, **caractérisé en ce que** l'échangeur thermique (1) comprend une pompe de masse (12) pour le convoyage de la masse de confiserie à travers l'échangeur thermique (1) et la pompe (22) est conçue comme une pompe de nettoyage séparée (23) en plus de la pompe de masse (12).

4. Échangeur thermique selon au moins l'une des revendications 1 à 2, **caractérisé en ce que**
le récipient (19) est conçu comme un réservoir de masse (10) de l'échangeur thermique (1) pour le logement de la masse de confiserie à traiter thermiquement et
la pompe (22) est conçue comme une pompe de masse (21) pour le convoyage de la masse de confiserie à travers l'échangeur thermique (1).

5. Procédé de nettoyage d'un échangeur thermique (1) pour le traitement thermique d'une masse de confiserie contenant des graisses, plus particulièrement d'un échangeur thermique (1) selon au moins l'une des revendications 1 à 4, l'échangeur thermique (1) étant conçu comme un thermorégulateur et comprenant un dispositif d'entraînement, un arbre d'entraînement (4) pouvant être entraîné par le dispositif d'entraînement et des outils de mélange (5), reliés à l'arbre d'entraînement (4), pour le mélange de la masse de confiserie pendant son passage à travers l'échangeur thermique (1), le dispositif d'entraînement étant conçu de manière réversible en ce qui concerne son sens de rotation, avec les étapes suivantes:
introduction d'une masse de nettoyage dans un récipient (19),
convoyage de la masse de nettoyage à travers une première conduite (14, relié avec le récipient (19) et une entrée (8) de l'échangeur thermique (1), dans une première direction de convoyage (49), vers l'entrée (8) de l'échangeur thermique (1), en direction d'une sortie (9) de l'échangeur thermique (1) et hors de celui-ci et
convoyage de la masse de nettoyage à travers une deuxième conduite (16), reliée avec le récipient (19) et la sortie (9) de l'échangeur thermique (1), dans une deuxième direction de convoyage (50) vers la sortie (9) de l'échangeur thermique (1), en direction de l'entrée (8) de l'échangeur thermique (1) et hors de celui-ci.

6. Procédé selon la revendication 5, **caractérisé en ce que** la masse de nettoyage est convoyée alternativement dans la première direction de convoyage (49) et dans la deuxième direction de convoyage (50) à travers l'échangeur thermique (1).

7. Procédé selon la revendication 5 ou 6, **caractérisé en ce que** l'échangeur thermique (1) comprend un réservoir de masse (10) pour le logement de la masse de confiserie à traiter thermiquement et le récipient (19) est conçu comme un récipient de nettoyage séparé (23) en plus du réservoir de masse (10).

8. Procédé selon la revendication 7, **caractérisé en ce que** l'échangeur thermique (1) comprend une pompe de masse (12) pour le convoyage de la masse de confiserie à travers l'échangeur thermique (1) et la pompe (22) est conçue comme une pompe de nettoyage séparée (23) en plus de la pompe de masse (12).

9. Échangeur thermique (1) selon au moins l'une des revendications 1 à 4, **caractérisé en ce que** la masse de nettoyage comprend du beurre de cacao, du chocolat, une masse de graisse, de l'huile ou de l'eau.

10. Procédé selon au moins l'une des revendications 5 à 8, **caractérisé en ce que** la masse de nettoyage comprend du beurre de cacao, du chocolat, une masse de graisse, de l'huile ou de l'eau.
